(19) **Europäisches Patentamt**
**European Patent Office**
**Office européen des brevets**

(11) **EP 4 485 842 A1**

(12) **EUROPEAN PATENT APPLICATION**

(43) Date of publication:
**01.01.2025  Bulletin 2025/01**

(21) Application number: **23181384.1**

(22) Date of filing: **26.06.2023**

(51) International Patent Classification (IPC):
**H04L 9/08** (2006.01)

(52) Cooperative Patent Classification (CPC):
**H04L 9/0855**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **ID Quantique S.A.**
**1227 Carouge (CH)**

(72) Inventors:
- **CAMPUS, Thomas**
  **74930 Arbusigny (FR)**
- **RIBORDY, Grégoire**
  **1256 Troinex (CH)**
- **LAYAT, Kevin**
  **74930 Pers-Jussy (FR)**

(74) Representative: **KATZAROV S.A.**
**Geneva Business Center**
**12 Avenue des Morgines**
**1213 Petit-Lancy (CH)**

(54) **COMMUNICATION METHOD AND SETUP USING TRUSTED NODES IN QUANTUM KEY DISTRIBUTION**

(57)    The present invention relates to a QKD communication method between a first node A and a second node B through at least one intermediary node T, comprising the steps of generating, at the first node A, a key K, which is symmetrically encrypted using a key K' to create a resulting encrypted key m, encrypting, at the first node A, said message m with a key $K_1$ and sending this encrypted message as well as $K_1$ to said intermediary node T, decrypting, at said intermediary node T, the message sent from said first node A with $K_1$ to obtain m and then OTP-encrypting said message m with a key $K_2$ and sending this encrypted message as well as the key $K_2$ to said second node B, and decrypting, at the second Node B, the message sent from T with $K_2$ to obtain m and symmetrically decrypts m with the key K' to recover the key K, characterized in that K' is obtained by the steps of generating, at the first node A, a key K' and a message m' to be sent to the second node B, sending the message m' to the at least one intermediary node T via a classical communication channel, which in turn forwards it to the second node B, and obtaining, at the second node, the key K' by using a private key and the message m'.

**Figure 3**

EP 4 485 842 A1

**Description**

**Technical Field**

The present invention relates to a device and a method reducing the confidential information known by a trusted node during QKD communication, and more particularly to a device and a method reducing the confidential information known by a trusted node during QKD communication without affecting the key overhead.

**Background of the invention**

Quantum cryptography or quantum key distribution, in the following also referred to as QKD, is a method allowing the distribution of a secret key between two distant parties, the emitter and the receiver, with a provable absolute security. Quantum key distribution relies on quantum physics principles and encoding information in quantum states, or qubits, as opposed to classical communication's use of bits. Usually, photons are used for these quantum states. Quantum key distribution exploits certain properties of these quantum states to ensure its security.

More particularly, the security of the methods using this technology comes from the fact that the measurement of a quantum state of an unknown quantum system, such as a qubit, modifies the system itself. In other words, a spy eavesdropping on a quantum communication channel cannot get information on the key without introducing errors in the key exchanged between the emitter and the receiver thereby informing the user of an eavesdropping attempt.

The encryption devices enable secure transmission of useful payload by performing some kind of symmetric encryption using the keys exchanged by quantum key distribution. Specific quantum key distribution systems are described for instance in US 5,307,410, and in the article by C. H. Bennett entitled "Quantum cryptography using any two non-orthogonal states", Phys. Rev. Lett. 68, 3121 (1992).

One of the most restrictive limitations of QKD is the distance limitation. Due to unavoidable loss in the optical waveguide and the fact that optical amplifiers cannot be used in a quantum channel, the distance between an emitter and a receiver, i.e., Alice and Bob respectively, is limited to about hundred kilometer in a commercial setup and up to four hundred kilometers in an academic experiment.

A first solution to this limitation, which was set up for increasing the distance between Alice and Bob, was the implementation of a Trusted Node (TN), a description of such network can be found in the "ITU-T SG 13 Y.3800, Framework for Networks to supporting Quantum Key Distribution".

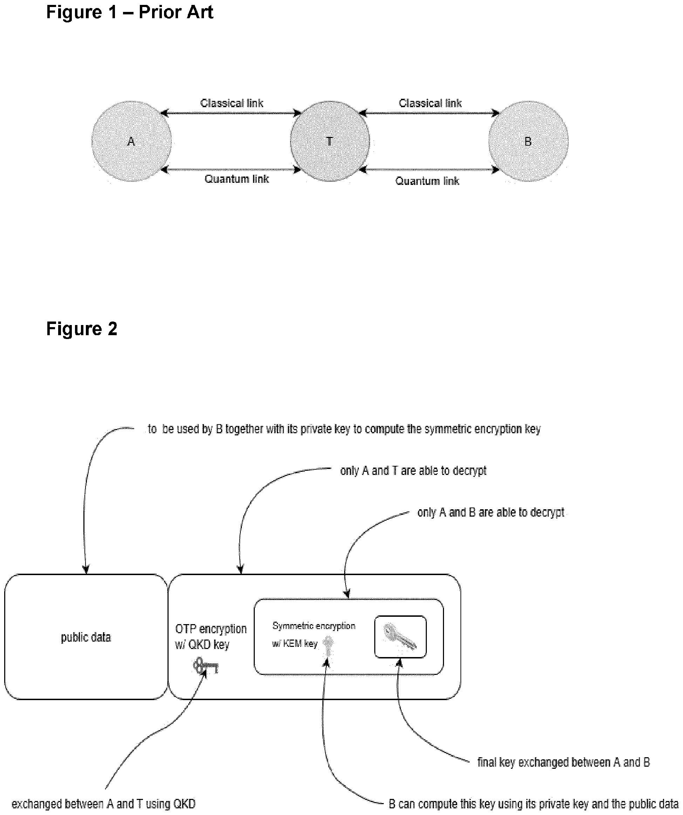

The principle of a Trusted Node (TN) is shown in figure 1. In this figure we can see that a Trusted Node is an intermediary element (Charlie) between Alice and Bob, which communicates with each of them and acts as a key relay.

More particularly, the Trusted Node comprises two QKD modules, each belonging to an independent QKD link. One of the QKD modules receives the QKD signal from Alice and processes it to produce a first secure key. The other QKD module generates a new QKD signal, and sends it to Bob, to generate a second independent key. The two independent keys are then collaboratively processed by Alice, Bob and the two QKD modules, to generate a final secure key between Alice and Bob.

This means that the Trusted Node comprises a Key Management System (KMS), a QKD receiver for exchanging a key with Alice as well as a QKD emitter for exchanging a key with Bob. Hence, the final key is present at every node, including the intermediate nodes i.e., the Trusted Node, at the KMS layer.

In other words, the intermediate node shares the same final key with Alice and Bob, thus it is necessary to fully trust the intermediate node.

Since the information is processed in the Trusted Node and the keys are available there, the Trusted Node requires it to be secured and trusted by both parties. By integrating several Trusted Nodes in a chain, the Trusted Node QKD model can be used to design long-range QKD networks, possibly spanning whole countries, continents or - by including satellites as Trusted Nodes - the entire world.

In current implementations, TNs store for a certain time (seconds or minutes) the final key that is eventually distributed by the two end users. As the name suggests, the key consumer, which is typically not controlling the intermediate nodes, must trust the network operator that the key is sufficiently protected, within the Trusted Node, from physical and IT attacks. This implies a security risk and prevents QKD from using cases following standards that forbid the storage of the key at third sites, e.g., in the financial sector.

In addition, when Trusted Nodes are used in a QKD network by several users, one may want to hide its exchanged key from it. It is typically the case when the intermediate nodes are shared between multiple customers.

In typical prior art solutions, the trusted node is a fully trusted intermediate node, which acts as a relay simply forwarding the keys. In that case, the intermediate node has full access to the confidential material on which the endpoints agree. This mode of operation is called the Key Relay (KR) mode.

However, as mentioned before, there is an interest in hiding the exchanged key from the Trusted Node. Especially when multiple users use the trusted node.

A prior art solution for this is to partially trust the intermediate and use asymmetric cryptography to encrypt the confidential material exchanged in the trusted node. This mode of operation is called the Encrypted Key Relay (EKR) mode. This method will be fully described below.

However, while the KR mode runs at 100% efficiency, meaning that it requires the least possible QKD exchanged keys. In the EKR mode, the protocol consumes keys coming from the QKD with an overhead proportional to the encrypted data size. By using classical cryptography such as RSA, a well-known public-key cryptosystem, or ECC, conventional elliptic-curve cryptography, this overhead is mitigable. However, if a public-key cryptographic scheme resilient against quantum attacks (usually called Post-Quantum Cryptography, abbreviated PQC afterwards) is used, then the overhead becomes unmanageable.

In addition, there is an interest in having a solution that maintains the confidentiality at a quantum-safe level hence matching QKD's performance.

Therefore, there is a need to provide a solution for reducing the confidential information known by the Trusted Node, while not impacting the overhead and the QKD consumption during data transmission using QKD protocols.

With current techniques, it is possible to reduce the confidential information known by a trusted node, however, they do not allow to maintain the quantum-safe level of confidentiality of the QKD, as PQC encryption cannot be used without affecting the key overhead.

## Summary of the invention

The above problems are solved by the present invention which comprises integrating Post-Quantum Cryptography (PQC) in a QKD network using trusted nodes.

More particularly, the invention comprises integrating PQC in the Encrypted Key Relay (EKR) mode without any overhead regarding consumption of keys coming from the QKD.

The invention herein described provides assurance that the trusted node does not have access to the confidential data exchanged between the endpoints. Such assurance is as strong as PQC is robust, which is commonly stated as "quantum-safe".

In addition, the present invention does not consume more keys exchanged via QKD than the KR mode. Therefore, it has 100% efficiency regarding key consumption.

A first aspect of the invention is a QKD communication method between a first node A and a second node B through at least one intermediary node T, comprising the steps of generating, at the first node A, a key K, which is symmetrically encrypted using a key K' to create a resulting encrypted key m, OTP-encrypting, at the first node A, said message m with a key $K_1$ and sending this encrypted message as well as $K_1$ to said intermediary node T, OTP-decrypting, at said intermediary node T, the message sent from said first node A with $K_1$ to obtain m and then OTP-encrypting said message m with a key $K_2$ and sending this encrypted message as well as the key $K_2$ to said second node B, and OTP-decrypting, at the second Node B, the message sent from T with $K_2$ to obtain m and symmetrically decrypts m with the key K' to recover the key K, characterized in that K' is obtained by the steps of generating, at the first node A, a key K' and a message m' to be sent to the second node B by using second node B's public key, sending the message m' to the at least one intermediary node T via a classical communication channel, which in turn forwards it to the second node B, and obtaining, at the second node, the key K' by using a private key and the message m'.

Preferably, the first four steps are carried out simultaneously with the K' obtention steps.

Advantageously, messages m and m' are sent through classical channels.

According to a preferred embodiment of the present invention, keys $K_1$ and $K_2$ are sent through quantum channels.

Advantageously, the first node A generates the key K' and the message m' by performing the server-side of a key agreement procedure, using B's public key.

Preferably, the second node obtains key K' by performing the client-side of the key agreement procedure using its private key.

A second aspect of the invention is a QKD communication setup comprising a first node, a second node and an intermediary node adapted to carry out the QKD communication method according to the first aspect of the invention.

Preferably, the first node is an Emitter comprising a QRNG device and a QKD emitter and the second node is a receiver comprising a QKD receiver.

## Brief description of the drawings

The invention will be described with reference to the drawings, in which the same reference numerals indicate the same feature. In particular,

- Figure 1 discloses a Prior Art Trusted Node setup.

- Figure 2 discloses a simplified structure of the message transferred through the nodes.

- Figure 3 discloses the execution of the EKR method according to the present invention.

- Figure 4 shows a flowchart representing the method according to the present invention.

**Detailed Description**

The invention will be described, for better understanding, with reference to specific embodiments. It will however be understood that the invention is not limited to the embodiments herein described but is rather defined by the claims and encompasses all embodiments which are within the scope of the claims.

The invention is shown in figures 2 to 4.

In the present description, we consider three nodes, but it should be understood that the present invention may of course apply to different setups with more than one emitter, receiver or intermediate node. The three nodes here are: (i) A for the emitter, also named Alice and containing a QKD emitter and a QRNG device; (ii) B for the receiver also named Bob and containing a QKD receiver; (iii) T for the intermediate node, which contains both a QKD emitter and a QKD receiver.

A typical Trusted Node setup is shown in Figure 1. The emitter A is connected to the intermediate node T via a classical channel and a quantum channel. Likewise, receiver B is connected to the intermediate node T via a classical channel and a quantum channel. However, there is no direct connection between the nodes A and B.

Therefore, all communications between A and B, including exchanges of keys via QKD and classical communications, transit through T.

In the present case, the intermediate node T is only partially trusted, i.e. (i) it is assumed to properly perform its duties (especially the reception/transmission of messages and the associated security duties); (ii) and the keys agreed between A and B are not revealed to T.

It is noted that these assumptions are typical in the case of an intermediate node T shared between multiple customers. In this case, a given customer does not want other users of the intermediate node to have access to the key he exchanges.

Moreover, in this setup, node B possesses an asymmetric key pair, and node A obtained the public counterpart of this key pair.

Figure 2 discloses a simplified structure of the typical messages exchanged by the nodes A and B through T.

In a typical prior art protocol, the exchange of QKD key between A and B through T is performed as per the following steps.

1. Node A performs the server-side of a key agreement procedure using B's public key. It leads to generate a key K and a message m to be sent to B.

2. Node A and T exchange a QKD-exchanged key K1, generated by the QKD protocol, via their pair of QKD emitter/receiver.

3. Node A performs a bitwise-XOR of the message m with the key K1 to encrypt the message m and send this encrypted message to T via their classical communication channel.

4. Node T performs a bitwise-XOR of the message sent from A with $K_1$ to obtain m.

5. Node T and B exchange a QKD-exchanged key K2, generated by the QKD protocol, via their pair of QKD emitter/receiver.

6. Node T performs a bitwise-XOR of the message m with the key K2 to encrypt the message m and send this encrypted message to B via their classical communication channel.

7. Node B performs bitwise-XOR of the message sent from T with K2 to obtain m.

8. Node B performs the client-side of the key agreement procedure using its private key and the message m to obtain the key K.

As a result, the nodes A and B have agreed on the key K, without revealing it to node T.

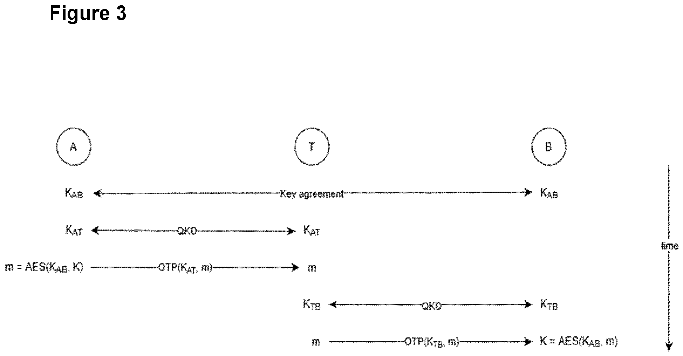

Now we shall describe the present invention in reference to Figure 3 which discloses the execution of the EKR protocol between the nodes of the present invention.

The above-described conventional protocol is based on the use of bitwise-XOR for encryption (usually called One-Time Pad encryption, abbreviated OTP), this scheme requires keys K1 and K2 to be as large as the message m they encrypt.

According to the present invention, using an EKR mode permits leverage Elliptic Curve Cryptography (ECC) in the key agreement procedure, which leads to m being as large as the key K agreed between A and B. Therefore, the use of ECC-based EKR mode does not consume more QKD-exchanged keys than necessary.

This can be resumed by the following equation:

$$Size(m) = Size(QKD\text{-}exchanged\ keys) = Size(K)$$

However, the size of the message m depends on the key agreement procedure chosen. As an example, if one replaces ECC by PQC, m tends to be several orders of magnitude larger than the agreed key K. Thus, deploying PQC instead of ECC would therefore lead to consuming tens of QKD-exchanged keys for one key agreed between A and B.

Such situation would therefore lead to a situation resumed by the following equation:

$$Size(m) = Size(QKD\text{-}exchanged\ keys) \gg Size(K)$$

As mentioned earlier, this consumption of QKD keys is not acceptable for normal use of the QKD setup. Hence, the present invention proposes a different approach.

The present invention permits full mitigation of this issue by essentially adding an additional layer of encryption.

It is noted that it does not specifically rely on PQC, but can leverage any key agreement procedure, including PQC-based key encapsulation mechanism, certified classical procedure (as per NIST's SP-800-56c) or a combination of several methods.

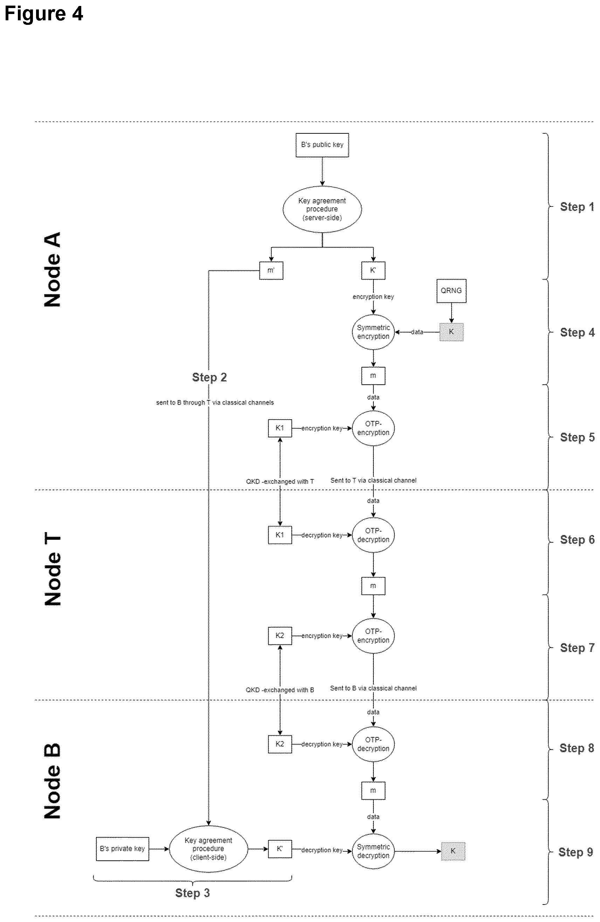

The present invention therefore relates to a QKD communication method which is represented in Figure 4 and comprising the following steps:

Step 1. Node A performs the server-side of a key agreement procedure, using B's public key. It leads to generate a key K' and a message m' to be sent to B.

Step 2. Node A sends the message m' to T via their classical communication channel, which in turn forwards it to B.

Step 3. Node B performs the client-side of the key agreement procedure using its private key and the message m' to obtain the key K'.

Step 4. Using its QNRG, node A generates a key K, which is symmetrically encrypted using the key K'. The resulting encrypted key is called m.

Step 5. Node A performs a bitwise-XOR of the message m with a key K1 and sends this encrypted message to T via their classical communication channel. The key K1 is transmitted to T via the pair of QKD emitter/receiver between A and T.

Step 6. Node T performs a bitwise-XOR of the message sent from A with K to obtain m.

Step 7. Repeat step 5 between T and B with a key K2.

Step 8. Node B performs a bitwise-XOR of the message sent from T with K2 to obtain m.

Step 9. Node B symmetrically decrypts m with the key K' it obtained in step 3 to recover the key K.

The result of the above-described protocol is that nodes A and B have agreed on the key K, without revealing it to node T.

According to a preferred embodiment, steps 2-3 are performed together with steps 5-6-7-8.

With this design, the OTP-encrypted message is itself the symmetric encryption of the final key agreed between A and B, which is usually as large as this key.

With this method, the situation returns to the desirable situation resumed by the equation: Size(m) = Size(QKD-exchanged keys)= Size(K), and this independently from the key agreement procedure chosen. It leads to an optimal QKD-consumption even if a PQC-based key agreement procedure is chosen, or if several key agreement procedures are combined.

The proposed scheme is also optimal with regard to QKD consumption. Indeed, for most of the symmetric ciphers, the message m will be as large as the key final key K. Therefore, OTP-encrypting m requires exactly as much QKD-exchanged key as K is large, which is optimal with currently available technologies.

Regarding the external security, an attacker eavesdropping the public communication would capture:

1. The public data required to perform the key agreement between A and B, leading to an exchanged key K'.

2. The OTP-encryption (bitwise-XOR) of the AES-encryption of the final key K agreed between A and B, with encryption key being K'.

The protection of K' offered by point 1 is as strong as the underlying key agreement procedure leveraged. However, an attacker being able to recover K' would only be able to exploit it by first decrypting an OTP-encrypted message. Therefore, the overall construction is as safe as OTP with QKD-exchanged keys. It means that the proposed construction matches the information theoretic security (ITS) of QKD.

Regarding the confidentially within the trusted node, an attacker eavesdropping the communication passing through T would capture:

1. The public data required to perform the key agreement between A and B, leading to an exchanged key K'.

2. the AES-encryption of the final key K agreed between A and B, with encryption key being K'.

The attacker would be able to recover K by either directly breaking the AES encryption, or by recovering the key K'. The latter means breaking the underlying key agreement. Therefore, confidentiality within the node T is as strong the weakest point between the key agreement and AES. When one uses a PQC-based key agreement, it means that the proposed construction offers quantum-safe confidentiality.

Finally, the proposed protocol is agile, in the sense that the key agreement procedure can be changed at will and can even combine certified and cutting-edge cryptographic technologies such as PQC.

While the embodiments have been described in conjunction with a number of embodiments, it is evident that many alternatives, modifications and variations would be or are apparent to those of ordinary skill in the applicable arts. Accordingly, this disclosure is intended to embrace all such alternatives, modifications, equivalents and variations that are within the scope of this disclosure. This is, for example, particularly the case regarding the different nodes which can be used as well as their numbers.

**Claims**

1. QKD communication method between a first node A and a second node B through at least one intermediary node T, comprising the steps of:

   generating, at the first node A, a key K, which is symmetrically encrypted using a key K' to create a resulting encrypted key m,
   OTP-encrypting, at the first node A, said message m with a key $K_1$ and sending this encrypted message as well as $K_1$ to said intermediary node T,
   OTP-decrypting, at said intermediary node T, the message sent from said first node A with $K_1$ to obtain m and then OTP-encrypting said message m with a key $K_2$ and sending this encrypted message as well as the key $K_2$ to said second node B, and
   OTP-decrypting, at the second Node B, the message sent from T with $K_2$ to obtain m and symmetrically decrypts m with the key K' to recover the key K,
   **characterized in that** K' is obtained by the steps of:

   generating, at the first node A, a key K' and a message m' to be sent to the second node B by using second node B's public key,
   sending the message m' to the at least one intermediary node T via a classical communication channel, which in turn forwards it to the second node B, and
   obtaining, at the second node, the key K' by using a private key and the message m'.

2. QKD communication method according to claim 1, **characterized in that** the first four steps are carried out simultaneously with the K' obtention steps.

3. QKD communication method according to any one of claims 1 to 2, **characterized in that** messages m and m' are sent through classical channels.

4. QKD communication method according to any one of claims 1 to 3, **characterized in that** keys $K_1$ and $K_2$ are sent through quantum channels.

5. QKD communication method according to any one of claims 1 to 4, **characterized in that** the first node A generates the key K' and the message m' by performing the server-side of a key agreement procedure, using B's public key.

6. QKD communication method according to any one of claims 1 to 5, **characterized in that** the second node obtains key K' by performing the client-side of the key agreement procedure using its private key.

7. QKD communication setup comprising a first node, a second node and an intermediary node adapted to carry out the QKD communication method according to any one of claims 1 to 6.

8. QKD communication setup according to claim 7, **characterized in that** the first node is an Emitter comprising a QRNG device and a QKD emitter and the second node is a receiver comprising a QKD receiver.

## Figure 1 – Prior Art

## Figure 2

# Figure 3

# Figure 4

Europäisches
Patentamt

European
Patent Office

Office européen
des brevets

# EUROPEAN SEARCH REPORT

**Application Number**

EP 23 18 1384

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2020/351086 A1 (WALENTA NINO [CH] ET AL) 5 November 2020 (2020-11-05) * paragraph [0050] – paragraph [0062]; figures 1C, 1D * | 1-8 | INV. H04L9/08 |
| A | EP 4 068 677 A1 (DEUTSCHE TELEKOM AG [DE]) 5 October 2022 (2022-10-05) * paragraphs [0012] – [0017]; figure 1 * * paragraph [0058] – paragraph [0062]; figure 2 * | 1-8 | |
| A,D | KAORU KENYOSHI NICT JAPAN: "Proposed modifications to the draft Recommendation ITU-T Y.QKDN_FR "Framework for Networks to support Quantum Key Distribution";C25", ITU-T DRAFT; STUDY PERIOD 2017-2020; STUDY GROUP 13; SERIES C25, INTERNATIONAL TELECOMMUNICATION UNION, GENEVA ; CH , vol. 16/13 17 May 2019 (2019-05-17), pages 1-17, XP044267162, Retrieved from the Internet: URL:https://www.itu.int/ifa/t/2017/sg13/exchange/wp3/q16/201905/Drafting/Y.QKDN_FR/NICT_rev_Doc-25 Proposed modifications to the draft Recommendation ITU-T Y.QKDN_FR.20190515_R3.docx [retrieved on 2019-05-17] * section 6; figure 1 * | 1-8 | |

**TECHNICAL FIELDS SEARCHED (IPC)**

H04L

The present search report has been drawn up for all claims

| Place of search | Date of completion of the search | Examiner |
|---|---|---|
| Munich | 30 November 2023 | Prins, Leendert |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 18 1384

This annex lists the patent family members relating to the patent documents cited in the above-mentioned European search report.
The members are as contained in the European Patent Office EDP file on
The European Patent Office is in no way liable for these particulars which are merely given for the purpose of information.

30-11-2023

| Patent document cited in search report | Publication date | Patent family member(s) | Publication date |
|---|---|---|---|
| US 2020351086 A1 | 05-11-2020 | US 2020351086 A1 | 05-11-2020 |
| | | WO 2020227141 A1 | 12-11-2020 |
| EP 4068677 A1 | 05-10-2022 | EP 4068677 A1 | 05-10-2022 |
| | | US 2022321333 A1 | 06-10-2022 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5307410 A

**Non-patent literature cited in the description**

- **C. H. BENNETT**. Quantum cryptography using any two non-orthogonal states. *Phys. Rev. Lett.*, 1992, vol. 68, 3121